# EUROPÄISCHE PATENTSCHRIFT

(11) **EP 2 877 654 B1**
(45) Veröffentlichungstag und Bekanntmachung des Hinweises auf die Patenterteilung: **27.04.2016**
(21) Anmeldenummer: 13739195.9
(22) Anmeldetag: 16.07.2013
(51) Int. Cl.: E04H 12/08, E04H 12/10, E04H 12/00, E04B 1/19, E04B 1/24

(54) **MODULARER TURM EINER WINDKRAFTANLAGE**
MODULAR TOWER FOR A WIND POWER PLANT
MÂT MODULAIRE D'UNE ÉOLIENNE

(30) Priorität: 25.07.2012 DE 102012106772
(43) Veröffentlichungstag der Anmeldung: 03.06.2015
(73) Patentinhaber: ThyssenKrupp Steel Europe AG, 47166 Duisburg (DE)
(72) Erfinder: PATON, Adrian, 46539 Dinslaken (DE); HIRT, Mark, 44791 Bochum (DE); PATBERG, Lothar, 47445 Moers (DE); BAGCI, Hasan, 47259 Duisburg (DE); FECHTE-HEINEN, Rainer, 46238 Bottrop (DE); DREWES, Stephan, 41236 Mönchengladbach (DE); SAVVAS, Konstantinos, 46045 Oberhausen (DE)
(74) Vertreter: ThyssenKrupp Intellectual Property GmbH
(86) Internationale Anmeldenummer: PCT/EP2013/064997
(87) Internationale Veröffentlichungsnummer: WO 2014/016166

(56) Entgegenhaltungen:
- WO-A1-2005/021897
- DE-A1-102006 056 274
- FR-A1- 2 384 084
- GB-A- 2 476 051

## Beschreibung

Die Erfindung betrifft einen Turm einer Windkraftanlage mit einem Unterteil in Form eines mindestens zwei Eckstiele aufweisenden Gitter- oder Fachwerkturms und einem Oberteil in Form eines im Querschnitt im Wesentlichen runden Rohrturms, wobei der jeweilige Eckstiel aus mehreren in Längsrichtung miteinander verbundenen Stahlrohrprofilen zusammengesetzt ist.

Die Entwicklung bei im Binnenland zu errichtenden Windenergieanlagen geht zu immer höheren Nabenhöhen jenseits von 100 m, um höhere und konstantere Windgeschwindigkeiten zu nutzen und somit den Wirkungsgrad dieser Windenergieanlagen zu verbessern. Höhere rohrförmige Türme mit größeren und leistungsstärkeren Rotoren und Generatoren erfordern aber zugleich eine Vergrößerung der Wandstärken und Durchmesser der Turmsegmente, um die daraus resultierenden größeren strukturmechanischen Anforderungen wie Steifigkeit, Knicksicherheit und Dauerfestigkeit zu erfüllen. Die Vergrößerung der Durchmesser der Turmsegmente führt aber auch dazu, dass der Transport der vorgefertigten rohrförmigen Turmsegmente auf vielen Straßen aufgrund von Restriktionen, z.B. Brückendurchfahrthöhen von 4,4 m, mit der konventionellen querorientierten Bauweise nicht mehr möglich ist.

Ein möglicher Lösungsansatz, der beispielsweise in der DE 603 17 372 T2 und auch in der WO 2009/048955 A1 vorgeschlagen wird, ist die sogenannte längsorientierte Bauweise, insbesondere im unteren Turmbereich, bei dem die Durchmesser der fertigen rohrförmigen Turmsegmente schließlich mehr als 4,4 m betragen. Dabei werden rohrförmige Turmabschnitte erst an der Baustelle, d.h. am Standort der Windkraftanlage, aus mehreren bogenförmigen Schalensegmente zusammengesetzt und die so hergestellten rohrförmigen (ringförmigen) Turmsegmente zum Gesamtturm verbunden. Um das Schweißen in großen Höhen zu vermeiden, werden die Schalensegmente bei der aus der DE 603 17 372 T2 bekannten Turmkonstruktion mit gelochten horizontalen und vertikalen Flanschen versehen, die eine Verbindung der Schalensegmente durch Schrauben ermöglichen. Dieser Lösungsansatz hat jedoch einige Nachteile. So sind z.B. bei großen Schalensegmenten bedingt durch das Eigengewicht der Schalensegmente Verformungen zu erwarten, die während der Montage zu Handhabungs- bzw. Passungsproblemen führen können. Andererseits ist bei einer Unterteilung in viele kleine Schalensegmente die Anzahl der herzustellenden Schraubverbindungen relativ hoch, was die Montage- und auch die Wartungskosten für ein Nachziehen der Schrauben ansteigen lässt.

Neben Windkraftanlagen mit Rohrturm und Windkraftanlagen mit Gitterturm (Fachwerkturm) sind auch Windkraftanlagen mit Türmen in Hybridbauweise bekannt, die einen unteren Gitterturm (Fachwerkturm) und einen damit verbundenen oberen Rohrturm aufweisen. Aus der DE 10 2006 056 274 A1 ist ein Turm der eingangs genannten Art bekannt, der im unteren Teil einen Gitterturm mit wenigstens drei Eckstielen und im oberen Teil einen im Querschnitt runden Rohrturm aufweist, wobei im Übergangsbereich der obere Anschlussbereich des Unterteils mittels eines Übergangskörpers mit dem unteren Anschlussbereich des Oberteils verbunden ist. Der Übergangskörpers ist dabei nach Art eines Kegelstumpfmantels ausgebildet, wobei die Eckstiele in den Übergangsbereich hineinragen und im Übergangsbereich zwischen dem oberen Anschlussbereich des Unterteils und dem unteren Anschlussbereich des Oberteils mit dem Kegelstumpfmantel wenigstens abschnittsweise verschweißt sind. Der Gitterturm weist sich kreuzende Streben auf, die die Eckstiele des Gitterturms miteinander verbinden. Die Eckstiele des Gitterturms sind aus standardisierten Hohlprofilen, vorzugsweise aus Stahlrohren gebildet. Weiteren Stand der Technik bilden die Dokumente GB 2 476 051 A und FR 2 384 084 A1.

Der vorliegenden Erfindung liegt die Aufgabe zugrunde, einen Turm der eingangs genannten Art zu schaffen, der bei guter Transportierbarkeit seiner Komponenten eine kostengünstige Herstellung sowie eine vereinfachte Montage seiner Komponenten bietet.

Zur Lösung dieser Aufgabe wird ein Turm einer Windkraftanlage bzw. Windenergieanlage mit den Merkmalen des Anspruchs 1 vorgeschlagen.

Der erfindungsgemäße Turm ist dadurch gekennzeichnet, dass der jeweilige Eckstiel aus mindestens drei Stahlrohrprofilen zusammengesetzt ist, die mit gelochten Flanschen zur Aufnahme von mechanisch lösbaren Verbindungsmitteln versehen sind, wobei die Eckstiele untereinander durch an den Flanschen angebundene Querstreben und/oder Zugstreben verbunden sind, und wobei die Stahlrohrprofile des jeweiligen Eckstiels spiralnahtgeschweißte Stahlrohrprofile sind.

Der obere Teil des erfindungsgemäßen Turms, der in Form eines im Querschnitt im Wesentlichen runden Rohrturms ausgeführt ist, beginnt vorzugsweise ab einer Höhe von 60 m. Dieser obere Teil des erfindungsgemäßen Turms kann in konventioneller, querorientierter Bauweise realisiert werden, da der die strukturmechanischen Anforderungen erfüllende Durchmesser insoweit normalerweise unterhalb der aus logistischer Sicht kritischen Grenze von 4,4 m liegen dürfte. Der untere Teil des erfindungsgemäßen Turms, der in Form eines mindestens zwei, vorzugsweise drei Eckstiele aufweisenden Gitter- oder Fachwerkturms ausgeführt ist, wobei der jeweilige Eckstiel erfindungsgemäß aus mindestens drei in Längsrichtung miteinander verbundenen Stahlrohrprofilen zusammengesetzt ist, die mit gelochten Flanschen zur Aufnahme von mechanisch lösbaren Verbindungsmitteln versehen sind, vereinfacht den Transport und die Montage des Turms. Durch die Verteilung der aufzunehmenden Kräfte auf mehrere Eckstiele können diese erheblich schlanker dimensioniert werden als der entsprechende untere Teil eines herkömmlichen, im Querschnitt im Wesentlichen runden Rohrturms. Die erfindungsgemäßen Eckstiele lassen sich in logistischer Hinsicht deutlich einfacher handhaben. Die Anzahl der einzelnen mit Flanschen versehenen Stahlrohrprofile kann dabei variiert werden und ist von der Nabenhöhe sowie dem Gewicht der im Wesentlichen aus Generator, Getriebe und Rotorblättern bestehenden Windkraftmaschine abhängig. Beispielsweise kann der Gitterturm des erfindungsgemäßen Hybridturms vier, fünf oder sechs Eckstiele aufweisen. Die Unterteilung des jeweiligen Eckstiels in mindestens drei Stahlrohrprofile, die in Längsrichtung miteinander durch mechanisch lösbare Verbindungsmittel an den Flanschen verbunden werden, vereinfacht den Transport sowie die Montage der Komponenten eines Hybridturms für eine Windkraftanlage deutlich. Der Profildurchmesser der für den jeweiligen Eckstiel verwendeten Stahlrohre ist dabei vorzugsweise über die Gesamtlänge des Eckstiels im Wesentlichen gleich. Das Stahlrohrprofil wird je nach Anbindungswinkel zu den Flanschen lediglich unterschiedlich beschnitten. Diese Gleichteilstrategie (Gleichteilkonstruktion) führt zu reduzierten Stückkosten. Unter mechanisch lösbaren Verbindungsmitteln sind im vorliegenden Kontext unter anderem Schrauben, Bolzen und Schließringbolzen zu verstehen.

Die für die Eckstiele des erfindungsgemäßen Turms verwendeten Stahlrohrprofile werden durch Spiralnahtschweißen hergestellt. Im Unterschied zur Herstellung von längsnahtgeschweißten Stahlrohrprofilen, bei der jeder Rohrdurchmesser eine bestimmte Blechbreite voraussetzt, zeichnet sich die Spiralrohrherstellung dadurch aus, dass sich aus einer Band- oder Blechbreite Stahlrohre mit unterschiedlichem Rohrdurchmesser herstellen lassen. Die Verwendung von durch Spiralnahtschweißen hergestellten Stahlrohrprofilen ist in wirtschaftlicher Hinsicht vorteilhaft. Die dabei verwendeten Stahlbleche sind vorzugsweise warmgewalzte, mikrolegierte Stahlbleche, die eine obere Streckgrenze (ReH) von mindestens 355 N/mm² oder 420 N/mm² aufweisen. Besonders bevorzugt sind die Stahlrohrprofile (Eckstiele) des erfindungsgemäßen Turms aus hochfesten Stahlblechen mit einer oberen Streckgrenze (ReH) von z.B. mindestens 500 N/mm² oder 700 N/mm² hergestellt. Hierdurch lässt sich das Gewicht der Stahlrohrprofile (Eckstiele) reduzieren, wodurch der Transport sowie die Montage weiter vereinfacht werden.

Die Wanddicken und Durchmesser der Stahlrohrprofile sind insbesondere von der Turmhöhe und der Anzahl der Eckstiele abhängig. Die für die Eckstiele des erfindungsgemäßen Turms verwendeten Stahlrohrprofile haben beispielsweise eine Wanddicke im Bereich von 15 mm bis 30 mm und einen Rohraußendurchmesser im Bereich von 500 mm bis 1.800 mm, vorzugsweise im Bereich zwischen 500 mm bis 1.200 mm.

Zur sicheren Aufnahme auftretender Querkräfte im unteren Teil des Turms sind die einzelnen Eckstiele untereinander durch an den Flanschen angebundene Querstreben und/oder Zugstreben verbunden. Die Flansche der Stahlrohrprofile haben somit eine mehrfache Anbindungsfunktion; sie dienen der Längsanbindung der den jeweiligen Eckstiel bildenden Stahlrohrprofile und zudem der Queranbindung und/oder der Diagonalanbindung der Eckstiele untereinander, wobei jede dieser Anbindungen vorzugsweise mittels Verschraubung ausgeführt wird. Aufgrund dieser mehrfachen Anbindungsfunktion können die Flansche des erfindungsgemäßen Windenergieanlagenturms auch als Multi-Anbindungsflansche bezeichnet werden.

Die Querstreben sind vorzugsweise aus sich im Wesentlichen horizontal ersteckenden Stahlprofilen gebildet. Dabei kann es sich beispielsweise um Kantteile oder Walzprofile, insbesondere um winkel- oder U-profilförmige Streben handeln. Auch diese Querstreben sind vorzugsweise insoweit gleich ausgebildet als sie alle das gleiche Querschnittsprofil und die gleichen Querschnittsabmessungen aufweisen. Die Querstreben werden allerdings mit zunehmender Turmhöhe unterschiedlich abgelängt, nämlich kürzer bemessen.

Durch an den Flanschen angebundene Zugstreben (Diagonalstreben) lässt sich die Stabilität des erfindungsgemäßen Gesamtturms ebenfalls sicherstellen bzw. weiter erhöhen. Die Zugstreben können dabei als Stahlseile, vorzugsweise vorgespannte Stahlseile, oder als Kantteile oder Walzprofile ausgeführt sein. Bei der Verwendung von Stahlseilen als Zugstreben können diese auf einfache Art und Weise in aufgewickeltem Zustand zum Aufstellungsort des erfindungsgemäßen Turms transportiert werden. Ferner können in Bezug auf die Stahlseile Toleranzprobleme ausgeschlossen werden, da die Stahlseile am Standort des Turms bedarfsgerecht abgelängt werden können. In einer vorteilhaften Ausgestaltung des erfindungsgemäßen Turms sind eine oder mehrere der Zugstreben, beispielsweise Stahlseile, jeweils mit einer Spannvorrichtung zur Längenanpassung versehen.

Eine weitere bevorzugte Ausgestaltung der Erfindung ist dadurch gekennzeichnet, dass die Verbindungsstellen bzw. Enden der Stahlrohrprofile mit Laschen versehen sind, die Durchganglöcher oder -bohrungen zur Anbindung von Querstreben und/oder Diagonalenstreben (Zugstreben) aufweisen.

Bei den Laschen kann es sich um separat gefertigte Teile handeln, die jeweils mit einem Flansch am Ende des Stahlrohrprofils verschweißt werden. Alternativ kann die Lasche aber auch einstückig mit dem Flansch ausgebildet sein. Im zweiten Fall ist die Lasche beispielsweise durch Umformen aus dem den Flansch definierenden Stahlblechzuschnitt abgestellt. In beiden Fällen können die Lasche und der Flansch mit dem Stahlrohrprofil verschweißt sein, wobei die Lasche dann im Wesentlichen senkrecht zu dem Flansch ausgerichtet wird.

Bei der bevorzugten Verwendung von Kantteilen oder Walzprofilen als Diagonalstreben (Zugstreben) besteht die Möglichkeit zur Verbindung der Diagonalstreben untereinander in ihrem Kreuzpunkt, um die Stabilität des erfindungsgemäßen Gesamtturms weiter zu erhöhen. Die Diagonalstreben sind dabei beispielsweise durch Schrauben oder andere lösbare mechanische Verbindungsmittel im Kreuzungspunkt verbunden. Diese Verbindung kann vorteilhaft bereits bei der Vorfertigung der Turmkomponenten durchgeführt werden.

Weitere bevorzugte und vorteilhafte Ausgestaltungen des erfindungsgemäßen Turms einer Windkraftanlage sind in den Unteransprüchen angegeben.

Nachfolgend wird die Erfindung anhand einer mehrere Ausführungsbeispiele darstellenden Zeichnung näher erläutert. Es zeigen schematisch:
- Fig. 1: einen erfindungsgemäßen Turm einer Windkraftanlage, in perspektivischer Darstellung;
- Fig. 2: ein Detail des unteren Teils des Turms der Fig. 1, in vergrößerter Darstellung.
- Fig. 3: einen unteren Abschnitt des Gitter- oder Fachwerkturms eines erfindungsgemäßen Windkraftanlagenturms nach einem weiteren Ausführungsbeispiel, in perspektivischer Darstellung;
- Fig. 4: das Detail A des Gitter- oder Fachwerkturms der Fig. 3, in vergrößerter Darstellung;
- Fig. 5: das Detail B des Gitter- oder Fachwerkturms der Fig. 3, in vergrößerter Darstellung; und
- Fig. 6: einen Abschnitt des Gitter- oder Fachwerkturms der Fig. 3 im Bereich der Verbindung der Stahlrohrprofile zweier Eckstiele, in Vorderansicht.

Der in der Zeichnung dargestellte Turm 1 einer Windkraftanlage 2 ist aus einem Unterteil 1.1 in Form eines Gitter- oder Fachwerkturms und einem Oberteil 1.2 in Form eines im Querschnitt runden Rohrturms aufgebaut.

Am oberen Ende des Rohrturms 1.2 ist eine Windkraftanlage (Windenergieanlage) 2 montiert, die um eine im Wesentlichen vertikal verlaufende Achse drehbar gelagert ist. Die Windkraftanlage 2 umfasst einen Rotor 2.1 mit Rotorblättern 2.2, die vorzugsweise um ihre jeweilige Längsachse drehbar und somit im Wesentlichen stufenlos anstellbar sind, und einen im Gondelgehäuse 2.3 angeordneten Generator, dessen Welle über ein Getriebe und eine Kupplung mit dem Rotor 2.1 drehstarr verbunden ist.

Der Gitter- oder Fachwerkturm 1.1 weist in dem hier gezeigten Ausführungsbeispiel sechs Eckstiele 1.10 auf. Er kann aber auch mehr oder weniger als sechs Eckstiele besitzen. In jedem Fall weist er mindestens drei Eckstiele 1.10 auf, deren horizontaler Abstand voneinander ausgehend vom oberen Rohrturm 1.2 in Richtung Boden bzw. Fundament zunimmt. Die vorzugsweise im Wesentlichen geradlinigen Eckstiele 1.10 bilden somit eine drei- bzw. mehrbeinige Turmkonstruktion, deren Beine spitzwinklig zueinander gespreizt sind.

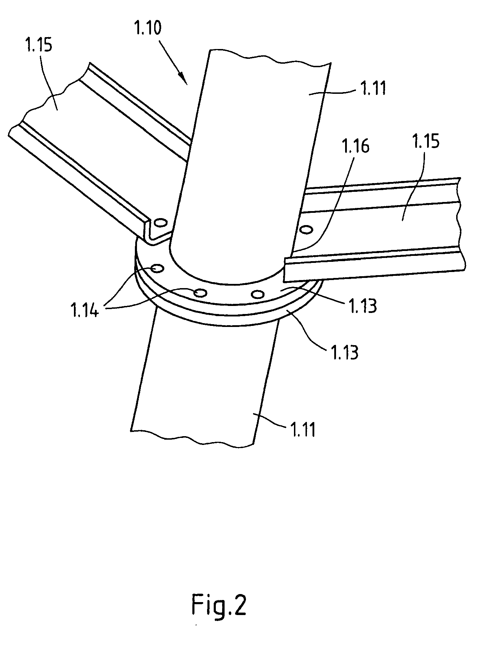

Jeder der Eckstiele 1.10 ist aus mindestens drei in Längsrichtung miteinander verbundenen Stahlrohrprofilen 1.11, 1.12 zusammengesetzt, die hierzu an ihren Verbindungsstellen mit gelochten Flanschen 1.13 zur Aufnahme von beispielsweise Schrauben (nicht gezeigt) versehen sind. Die Flansche 1.13 sind beispielsweise als Ringflansche ausgebildet. Der jeweilige Flansch bzw. Ringflansch 1.13 hat eine Mehrzahl von Durchgangslöchern 1.14, die auf einem gemeinsamen Teilkreis gleichmäßig voneinander beabstandet angeordnet sind (vgl. Fig. 2).

Vorzugsweise handelt es sich bei den für die Eckstiele 1.10 verwendeten Stahlrohrprofilen 1.11, 1.12 um Gleichteile, die spiralnahtgeschweißt sind. Die zu ihrer Herstellung verwendeten, bogenförmigen oder in eine runde Form umgeformten Stahlbleche sind beispielsweise warmgewalzte Stahlbleche mit einer Streckgrenze von mindestens 350 N/mm². Für die Herstellung der Stahlrohrprofile der Eckstiele 1.10 können allerdings auch höherfeste Stahlbleche verwendet werden, z.B. Stahlbleche mit einer Streckgrenze im Bereich von 500 bis 700 N/mm².

Die Stahlrohrprofile 1.11, 1.12 des jeweiligen Eckstiels 1.10 haben vorzugsweise eine Wanddicke im Bereich von 15 mm bis 30 mm. Ihr Durchmesser liegt z.B. im Bereich von 500 mm bis 1.800 mm. Bevorzugt sind die für die Eckstiele 1.10 verwendeten Stahlrohrprofile 1.11, 1.12 aus Standardrohren hergestellt.

Der jeweilige Ringflansch 1.13 ist vorzugsweise stoffschlüssig an einem der Enden des zum Aufbau eines Eckstiels 1.10 verwendeten Stahlrohrprofils 1.11, 1.12 angebracht, beispielsweise mittels Kehlnahtschweißung. Möglich ist aber auch eine kraft- und/oder formschlüssige Verbindung zwischen Ringflansch 1.13 und dem zugeordneten Stahlrohrende, beispielsweise durch eine Verschraubung, bei der das Stahlrohrende mit einem Außengewinde und der Ringflansch mit einem entsprechenden Innengewinde versehen ist.

Der jeweilige Ringflansch 1.13 ist in einer horizontalen Ebene angeordnet. Hierzu sind die mit den Ringflanschen 1.13 versehenen Enden der Stahlrohrprofile 1.11, 1.12 schräg beschnitten, so dass das jeweilige Schnittende des Stahlrohrprofils 1.11, 1.12 im fertig montierten Zustand des Gitter- oder Fachwerkturms 1.1 im Wesentlichen horizontal endet.

Die Eckstiele 1.10 sind untereinander durch Querstreben 1.15 verbunden. Hierzu werden die gleichen Ringflansche 1.13 verwendet, welche die Stahlrohre 1.11, 1.12, vorzugsweise Standardrohre, miteinander verbinden.

Die Querstreben 1.15 sind aus Stahlprofilen gebildet und erstrecken sich im Wesentlichen horizontal. Diejenigen Querstreben 1.15, die auf gleicher Höhe angeordnet sind, sind als Gleichteile ausgeführt. Die Länge der Querstreben 1.15 hängt dabei von ihrer Anbindungshöhe ab. Mit zunehmender Turmhöhe verringert sich die Länge der an den Ringflanschen 1.13 angebundnen Querstreben 1.15.

Der erfindungsgemäße Turm 1, zumindest sein unterer Gitterturmteil 1.1, weist somit einen modularen Aufbau unter Verwendung von standardisierten Stahlprofilen 1.11, 1.12, 1.15 auf.

Die Querstreben 1.15 sind beispielsweise als U-Profil ausgeführt (vgl. Fig. 2). Sie können aber auch eine andere Profilform aufweisen, z.B. ein L-Profil oder T-Profil.

Die Enden der jeweiligen Querstrebe 1.15 weisen vorzugsweise konkav oder schwalbenschwanzförmig ausgebildete oder polygonal eingebuchtete Stirnseiten 1.16 auf. Hierdurch lässt sich die Auflage- bzw. Berührungsfläche zwischen Querstrebe 1.15 und Ringflansch 1.13 vergrößern (vgl. Fig. 2).

Um die erforderliche Stabilität des Gesamtturms 1 zu gewährleisten bzw. weiter zu erhöhen, können zusätzliche Zugstreben 1.17 vorgesehen werden, die jeweils im Flanschbereich befestigt werden, so dass sie diagonal in dem Fachwerkrahmen verlaufen, der durch zwei benachbarte Eckstiele 1.10 und zwei im Wesentlichen parallel zueinander verlaufende Querstreben 1.15 definiert ist.

Die Zugstreben (Diagonalstreben) 1.17 sind beispielsweise aus Drahtseilen gebildet. Die Enden der Drahtseile 1.17 sind über geeignete Befestigungsmittel an den Durchgangsöffnungen 1.14 der Ringflansche 1.13 befestigt. Zum Zwecke ihrer Längenanpassung können die Zugstreben bzw. Drahtseile 1.17 jeweils mit einer Spannvorrichtung (nicht gezeigt) versehen sein. In Fig. 2 sind der Übersichtlichkeit halber die Zugstreben bzw. Drahtseile 1.17 sowie die Schraübbolzen nicht dargestellt.

Der obere Turmteil 1.2, der als im Querschnitt runder Rohrturm ausgebildet ist, beginnt ab einer Höhe von z.B. ca. 60 m. Er kann in konventioneller, querorientierter Bauweise ausgeführt sein und dementsprechend aus mehreren ringförmigen Rohrsegmenten zusammengesetzt sein.

Der Rohrturm 1.2 des erfindungsgemäßen Turms 1 ist vorzugsweise als konischer Stahlrohrturm ausgeführt. Alternativ kann er aber auch als zylindrischer Stahlrohrturm ausgeführt werden.

An seinem dem Fachwerk- oder Gitterturm 1.1 zugewandten Ende weist der Rohrturm 1.2 einen konischen oder kegelstumpfmantelförmigen Längsabschnitt auf. An diesen unteren Abschnitt 1.21 des Rohrturms 1.2 sind die oberen Enden der Eckstiele 1.10 angebunden. Die oberen Stahlrohre 1.12 der Eckstiele 1.10 können dabei in den kegelstumpfmantelförmigen oder konischen Längsabschnitt 1.21 des Rohrturms 1.2 hineinragen und sind dann mit der Innenseite des Rohrturms 1.2 verbunden, beispielsweise verschweißt. Der Rohrturm 1.2 kann an seinem unteren Ende aber auch eine kreisscheibenförmige oder ringscheibenförmige Verbindungsplatte (nicht gezeigt) mit einer Mehrzahl von Befestigungslöchern aufweisen, an denen die oberen Stahlrohre 1.12 der Eckstiele 1.10 über daran befestigte Ringflansche angebunden bzw. angeschraubt werden.

Die Höhe des aus dem Gitterturm 1.1 und dem Rohrturm 1.2 zusammengesetzten Gesamtturms 1 bzw. die Nabenhöhe des Rotors 2.1 beträgt zum Beispiel ca. 110 m.

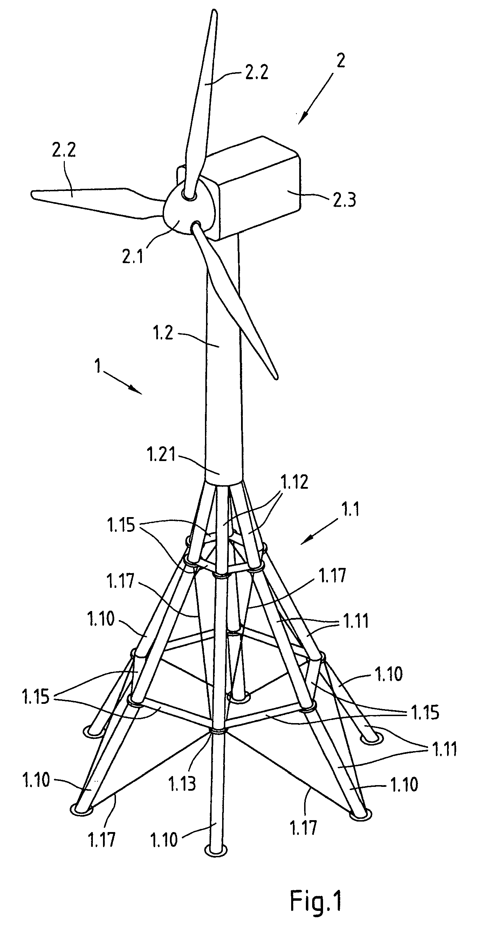

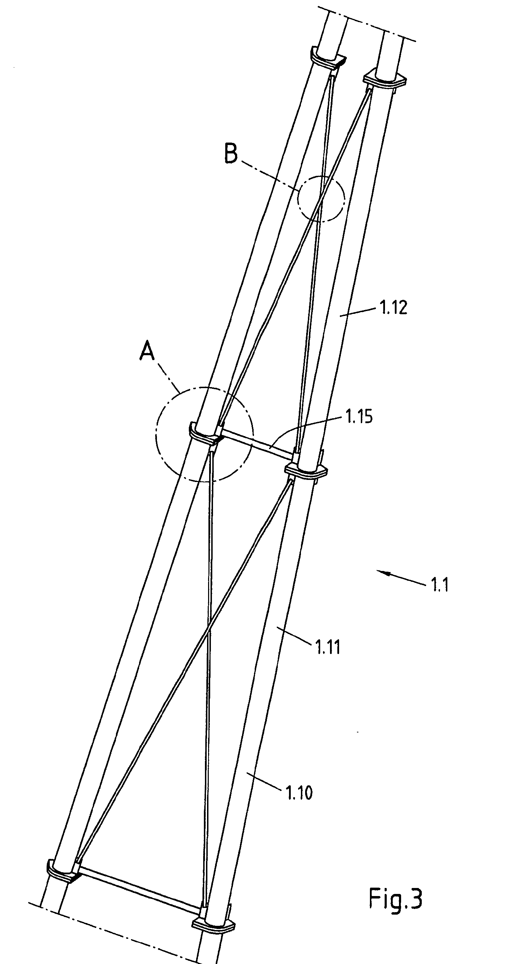

In Fig. 3 ist ein weiteres Ausführungsbeispiel des als Gitter- oder Fachwerkturm ausgebildeten unteren Teils 1.1 eines erfindungsgemäßen Turms einer Windkraftanlage dargestellt. Der Oberteil des Turms, der ähnlich wie in Fig. 1 aus einem im Querschnitt im Wesentlichen runden Rohrturm gebildet ist, ist in Fig. 3 nicht gezeigt.

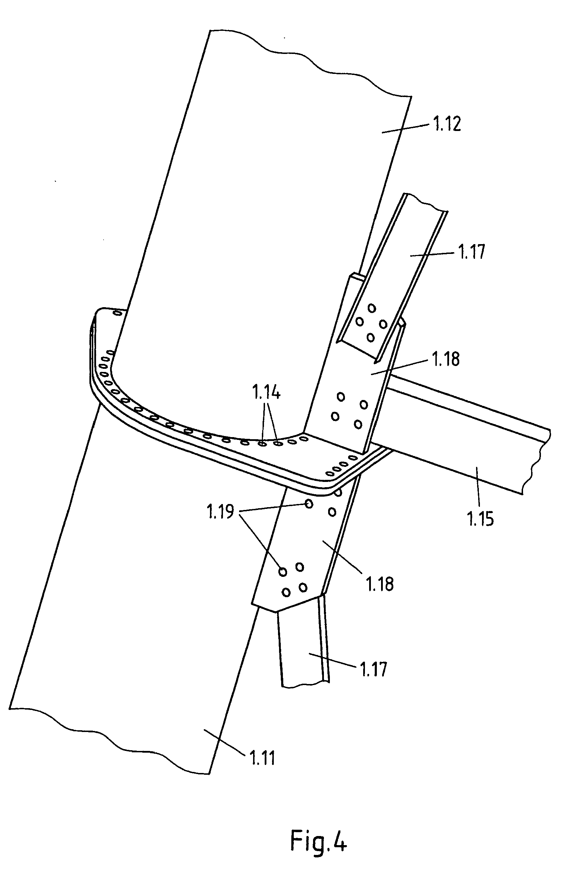

Der Gitter- oder Fachwerkturm 1.1 weist in diesem Ausführungsbeispiel mindestens zwei Eckstiele 1.10 auf, die jeweils aus mindestens drei in Längsrichtung miteinander verbundenen Stahlrohrprofilen 1.11, 1.12 zusammengesetzt sind. Die Stahlrohrprofile 1.11, 1.12 sind hierzu an ihren Verbindungsstellen mit gelochten Flanschen 1.13 zur Aufnahme lösbarer mechanischer Verbindungsmittel, z.B. Schrauben, versehen. Jeder der Flansche 1.13 gemäß Fig. 4 weist eine Mehrzahl von Durchgangslöchern 1.14 zur Aufnahme der Verbindungsmittel auf.

Des Weiteren sind an den Verbindungsstellen bzw. Enden der Stahlrohrprofile 1.11, 1.12 Laschen 1.18 vorgesehen. Die Lasche 1.18 und der Flansch 1.13 sind mit dem Stahlrohrprofil 1.11 bzw. 1.12 verschweißt, wobei die Lasche 1.18 im Wesentlichen senkrecht zu dem Flansch 1.13 ausgerichtet ist.

Wenn die Lasche 1.18 als separates Teil gefertigt wird, wird sie vorzugsweise auch mit Flansch 1.13 verschweißt (vgl. Fig. 4). Es liegt aber auch im Rahmen der Erfindung, die Lasche 1.18 und den Flansch 1.13 zusammen einstückig auszubilden. In diesem Fall wäre die Lasche 1.18 beispielsweise durch Umformen aus dem den Flansch 1.13 definierenden Stahlblechzuschnitt abgestellt.

Die jeweilige Lasche 1.18 weist ebenfalls eine Mehrzahl von Durchgangslöchern 1.19 zur Aufnahme von lösbaren mechanischen Verbindungsmittel auf. Die Laschen 1.18 dienen der Anbindung von Diagonalstreben (Zugstreben) 1.17. Darüber hinaus können an den Laschen 1.18 auch Querstreben 1.15 angebunden sein. Alternativ oder ergänzend können die Querstreben 1.15 aber auch an den Flanschen 1.13 angebunden werden bzw. sein.

Das Ausführungsbeispiel gemäß den Figuren 3 und 4 bietet die Möglichkeit, die Enden der Stahlrohrprofile 1.11, 1.12 im Wesentlichen senkrecht (rechtwinklig) zu ihrer Längsachse abzulängen, d.h. ein Abschrägen der Rohrenden - wie in Fig. 2 dargestellt - ist hier nicht vorgesehen. Die Aribindung der Querstreben 1.15 an die Stahlrohrprofile 1.11, 1.12 ist dann trotz ihrer im Wesentlichen rechtwinkligen Schnittenden bzw. der im Wesentlichen senkrechten Ausrichtung der Flansche 1.13 bezogen auf die Stahlrohrprofillängsachse ohne Umbiegen der Enden der Querstreben 1.15 möglich, da letztere in diesem Fall an den Laschen 1.18 angebunden werden. Die Laschen 1.18 ermöglichen somit einen Ausgleich des Anbindungswinkels zwischen Querstrebe 1.15 und der Stahlrohrprofillängsachse bei beliebigen Neigungswinkeln der Stahlrohrprofillängsachse (Eckstiellängsachse).

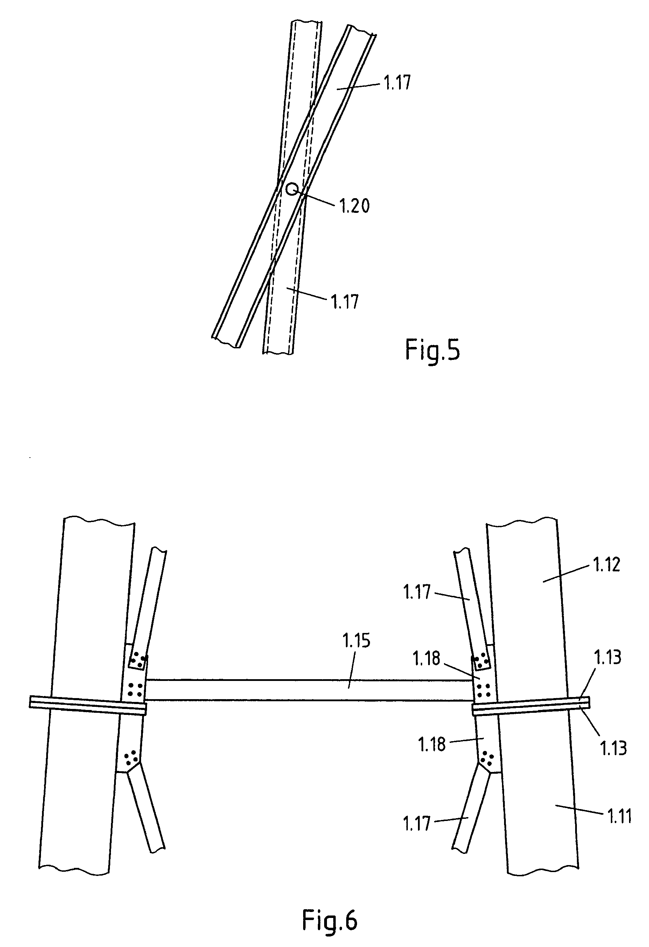

Die Diagonalstreben 1.17, die in dem Ausführungsbeispiel gemäß den Figuren 3 bis 6 als Kantteile oder Walzprofile ausgeführt sind, sind vorzugsweise in ihrem Kreuzungsbereich 1.20 miteinander verbunden. Zur Verbindung bzw. Fixierung der Diagonalstreben 1.17 im Kreuzungsbereich 1.20 dienen wiederum mechanische lösbare Verbindungsmittel, beispielsweise Schrauben. Die Verbindung bzw. eine Vorfixierung der Diagonalstreben 1.17 im Kreuzungsbereich 1.20 kann bereits im Zuge der Vorfertigung der Diagonalstreben 1.17 erfolgen, wodurch die Montage des Gitter- oder Fachwerkturms 1.1 am Aufstellungsort des erfindungsgemäßen Turms vereinfacht bzw. verkürzt wird.

Die Ausführung des erfindungsgemäßen Turms ist nicht auf die in der Zeichnung dargestellten Ausführungsbeispiele beschränkt. Vielmehr sind zahlreiche Varianten denkbar, die auch bei einer von dem gezeigten Ausführungsbeispiel abweichenden Gestaltung von der in den beiliegenden Ansprüchen angegebenen Erfindung Gebrauch machen. So können an den Flanschen 1.13 der Eckstielrohre 1.11,1.12 beispielsweise anstelle von Stahlseilen 1.17 auch Stahlprofilstäbe, z.B. L-profilförmige Kantteile als diagonale Zugstreben angebunden sein.

## Patentansprüche

1. Turm (1) einer Windkraftanlage mit einem Unterteil (1.1) in Form eines mindestens zwei Eckstiele (1.10) aufweisenden Gitter- oder Fachwerkturms und einem Oberteil (1.2) in Form eines im Querschnitt im Wesentlichen runden Rohrturms, wobei der jeweilige Eckstiel (1.10) aus mehreren in Längsrichtung miteinander verbundenen Stahlrohrprofilen (1.11, 1.12) zusammengesetzt ist, **dadurch gekennzeichnet, dass** der jeweilige Eckstiel (1.10) aus mindestens drei Stahlrohrprofilen (1.11, 1.12) zusammengesetzt ist, die mit gelochten Flanschen (1.13) zur Aufnahme von Schrauben versehen sind, wobei die Eckstiele (1.10) untereinander durch an den Flanschen (1.13) angebundene Querstreben (1.15) und/oder Zugstreben (1.17) verbunden sind, und wobei die Stahlrohrprofile (1.11, 1.12) des jeweiligen Eckstiels (1.10) spiralnahtgeschweißte Stahlrohrprofile sind.

2. Turm nach Anspruch 1, **dadurch gekennzeichnet, dass** der jeweilige Flansch (1.13) als Ringflansch ausgebildet ist und im Wesentlichen in einer horizontalen Ebene angeordnet ist.

3. Turm nach Anspruch 2, **dadurch gekennzeichnet, dass** die mit den Ringflanschen (1.13) versehenen Enden der Stahlrohrprofile (1.11, 1.12) schräg beschnitten sind, so dass das jeweilige Schnittende des Stahlrohrprofils (1.11, 1.12) im fertig montierten Zustand des Gitter- oder Fachwerkturms (1.1) im Wesentlichen horizontal endet.

4. Turm nach einem der Ansprüche 1 bis 3, **dadurch gekennzeichnet, dass** der jeweilige Flansch (1.13) stoffschlüssig mit dem zugeordneten Stahlrohrprofil (1.11, 1.12) verbunden ist.

5. Turm nach einem der Ansprüche 1 bis 4, **dadurch gekennzeichnet, dass** die einen Höhenabschnitt des Gitter- oder Fachwerkturms (1.1) bildenden Stahlrohrprofile (1.11; 1.12) als Gleichteile ausgeführt sind.

6. Turm nach einem der Ansprüche 1 bis 5, **dadurch gekennzeichnet, dass** die Querstreben (1.15) aus sich im Wesentlichen horizontal ersteckenden Stahlprofilen gebildet sind.

7. Turm nach Anspruch 6, **dadurch gekennzeichnet, dass** die sich im Wesentlichen horizontal ersteckenden Stahlprofile (1.15) als Gleichteile ausgeführt sind.

8. Turm nach einem der Ansprüche 1 bis 7, **dadurch gekennzeichnet, dass** die Enden der jeweiligen Querstrebe (1.15) konkav oder schwalbenschwanzförmig ausgebildete oder polygonal eingebuchtete Stirnseiten (1.16) aufweisen.

9. Turm nach einem der Ansprüche 1 bis 8, **dadurch gekennzeichnet, dass** die Zugstreben (1.17) aus sich diagonal ersteckenden Drahtseilen gebildet sind.

10. Turm nach einem der Ansprüche 1 bis 9, **dadurch gekennzeichnet, dass** eine oder mehrere der Zugstreben (1.17) jeweils mit einer Spannvorrichtung zur Längenanpassung der zugeordneten Zugstrebe (1.17) versehen sind.

11. Turm nach einem der Ansprüche 1 bis 10, **dadurch gekennzeichnet, dass** die Stahlrohrprofile (1.11, 1.12) des jeweiligen Eckstiels (1.10) eine Rohrwanddicke im Bereich von 15 mm bis 30 mm aufweisen.

12. Turm nach einem der Ansprüche 1 bis 11, **dadurch gekennzeichnet, dass** die Stahlrohrprofile (1.11, 1.12) des jeweiligen Eckstiels (1.10) einen Durchmesser im Bereich von 500 mm bis 1.800 mm aufweisen.

13. Turm nach einem der Ansprüche 1 bis 12, **dadurch gekennzeichnet, dass** der Rohrturm (1.2) als konischer oder zylindrischer Stahlrohrturm ausgeführt ist.

14. Turm nach einem der Ansprüche 1 bis 13, **dadurch gekennzeichnet, dass** der Rohrturm (1.2) an seinem dem Gitter- oder Fachwerkturm (1.1) zugewandten Ende einen konischen oder kegelstumpfmantelförmigen Längsabschnitt (1.21) aufweist.

## Claims

1. Tower (1) of a wind power plant, having a lower part (1.1) in the form of a lattice tower or framework tower with at least two corner bars (1.10), and an upper part (1.2) in the form of a cross-sectionally substantially round tubular tower, wherein each particular corner bar (1.10) is put together from a plurality of steel tube profiles (1.11, 1.12) that are connected together in the longitudinal direction, **characterized in that** each particular corner bar (1.10) is put together from at least three steel tube profiles (1.11, 1.12) which are provided with perforated flanges (1.13) for holding screws, wherein the corner bars (1.10) are connected together by cross struts (1.15) and/or diagonal struts (1.17) attached to the flanges (1.13), and wherein the steel tube profiles (1.11, 1.12) of each particular corner bar (1.10) are spirally welded steel tube profiles.

2. Tower according to Claim 1, **characterized in that** each particular flange (1.13) is in the form of an annular flange and is arranged substantially in a horizontal plane.

3. Tower according to Claim 2, **characterized in that** the ends, provided with the annular flanges (1.13), of the steel tube profiles (1.11, 1.12) are cut obliquely such that each particular cut end of the steel tube profile (1.11, 1.12) ends in a substantially horizontal manner in the fully assembled state of the lattice tower or framework tower (1.1).

4. Tower according to one of Claims 1 to 3, **characterized in that** each particular flange (1.13) is cohesively connected to the associated steel tube profile (1.11, 1.12).

5. Tower according to one of Claims 1 to 4, **characterized in that** the steel tube profiles (1.11; 1.12) that form a height section of the lattice tower or framework tower (1.1) are embodied as identical parts.

6. Tower according to one of Claims 1 to 5, **characterized in that** the cross struts (1.15) are formed from substantially horizontally extending steel profiles.

7. Tower according to Claim 6, **characterized in that** the substantially horizontally extending steel profiles (1.15) are embodied as identical parts.

8. Tower according to one of Claims 1 to 7, **characterized in that** the ends of each particular cross strut (1.15) have end sides (1.16) that are formed in a concave or dovetail manner or are polygonally indented.

9. Tower according to one of Claims 1 to 8, **characterized in that** the diagonal struts (1.17) are formed from diagonally extending wire cables.

10. Tower according to one of Claims 1 to 9, **characterized in that** one or more of the diagonal struts (1.17) are provided in each case with a tensioning device for adapting the length of the associated diagonal strut (1.17).

11. Tower according to one of Claims 1 to 10, **characterized in that** the steel tube profiles (1.11, 1.12) of each particular corner bar (1.10) have a tube wall thickness in the range from 15 mm to 30 mm.

12. Tower according to one of Claims 1 to 11, **characterized in that** the steel tube profiles (1.11, 1.12) of each particular corner bar (1.10) have a diameter in the range from 500 mm to 1800 mm.

13. Tower according to one of Claims 1 to 12, **characterized in that** the tubular tower (1.2) is embodied as a conical or cylindrical steel tube tower.

14. Tower according to one of Claims 1 to 13, **characterized in that** the tubular tower (1.2) has a conical or frustoconical-casing-shaped longitudinal section (1.21) at its end facing the lattice tower or framework tower (1.1).

## Revendications

1. Tour (1) d'une éolienne comprenant une partie inférieure (1.1) sous la forme d'un tour en colombage ou en treillis présentant au moins deux poteaux d'angle (1.10) et une partie supérieure (1.2) sous la forme d'un tour tubulaire essentiellement rond en section transversale, la poteau d'angle respectif (1.10) se composant de plusieurs profilés tubulaires en acier (1.11, 1.12) connectés les uns aux autres dans la direction longitudinale, **caractérisé en ce que** la poteau d'angle respectif (1.10) se compose d'au moins trois profilés tubulaires en acier (1.11, 1.12) qui sont pourvus de flancs perforées (1.13) pour recevoir des vis, les poteaux d'angle (1.10) étant connectés les uns aux autres par des traverses (1.15) et/ou des tirants (1.17) relié (e) s aux flancs (1.13), et les profilés tubulaires en acier (1.11, 1.12) du poteau d'angle respectif (1.10) étant des profilés tubulaires en acier soudés en spirale.

2. Tour selon la revendication 1, **caractérisé en ce que** le flanc respective (1.13) est réalisée sous forme de flanc annulaire et est disposée essentiellement dans un plan horizontal.

3. Tour selon la revendication 2, **caractérisé en ce que** les extrémités des profilés tubulaires en acier (1.11, 1.12) pourvues des flancs annulaires (1.13) sont coupées obliquement de telle sorte que l'extrémité de coupe respective du profilé tubulaire en acier (1.11, 1.12), dans l'état fini monté du tour en colombage ou en treillis (1.1) se termine essentiellement horizontalement.

4. Tour selon l'une des revendications 1 à 3, **caractérisé en ce que** le flanc respective (1.13) est connectée par engagement par liaison de matière au profilé tubulaire en acier associé (1.11, 1.12).

5. Tour selon l'une des revendications 1 à 4, **caractérisé en ce que** les profilés tubulaires en acier (1.11, 1.12) formant une section de hauteur du tour en colombage ou en treillis (1.1) sont réalisés sous forme de pièces identiques.

6. Tour selon l'une des revendications 1 à 5, **caractérisé en ce que** les traverses (1.15) sont formées de profilés en acier s'étendant essentiellement horizontalement.

7. Tour selon la revendication 6, **caractérisé en ce que** les profilés en acier s'étendant essentiellement horizontalement (1.15) sont réalisés sous forme de pièces identiques.

8. Tour selon l'une des revendications 1 à 7, **caractérisé en ce que** les extrémités de la traverse respective (1.15) présentent des côtés frontaux (1.16) réalisés sous forme concave ou en forme de queue d'aronde ou échancrés sous forme polygonale.

9. Tour selon l'une des revendications 1 à 8, **caractérisé en ce que** les tirants (1.17) sont formés de câbles d'acier s'étendant en diagonale.

10. Tour selon l'une des revendications 1 à 9, **caractérisé en ce qu'**un ou plusieurs des tirants (1.17) sont à chaque fois pourvus d'un dispositif de tensionnement pour l'adaptation en longueur du tirant associé (1.17).

11. Tour selon l'une des revendications 1 à 10, **caractérisé en ce que** les profilés tubulaires en acier (1.11, 1.12) du poteau d'angle respectif (1.10) présentent une épaisseur de paroi tubulaire dans une plage de 15 mm à 30 mm.

12. Tour selon l'une des revendications 1 à 11, **caractérisé en ce que** les profilés tubulaires en acier (1.11, 1.12) du poteau d'angle respectif (1.10) présentent un diamètre dans une plage de 500 mm à 1800 mm.

13. Tour selon l'une des revendications 1 à 12, **caractérisé en ce que** le tour tubulaire (1.2) est réalisé sous forme de tour tubulaire en acier conique ou cylindrique.

14. Tour selon l'une des revendications 1 à 13, **caractérisé en ce que** le tour tubulaire (1.2) présente, au niveau de son extrémité tournée vers le tour en colombage ou en treillis (1.1), une portion longitudinale (1.21) conique ou en forme d'enveloppe tronconique.
